# FASCICULE DE BREVET EUROPEEN

(11) **EP 0 599 667 B1**
(45) Date de publication et mention de la délivrance du brevet: **23.10.1996**
(21) Numéro de dépôt: 93401954.8
(22) Date de dépôt: 27.07.1993
(51) Int. Cl.: B60N 2/48

(54) **Dispositif pour l'immobilisation d'une partie mobile de siège et son application à un appui-tête**
Vorrichtung zum Immobilisieren eines beweglichen Sitzteiles und Anwendung davon an einer Kopfstütze
Device for immobilising a movable seat part and use thereof in a headrest

(30) Priorité: 24.11.1992 FR 9214104
(43) Date de publication de la demande: 01.06.1994
(73) Titulaire: CESA COMPAGNIE EUROPEENNE DE SIEGES POUR AUTOMOBILES, F-92307 Levallois-Perret Cédex (FR)
(72) Inventeur: Auge, Jean-Louis, F-45230 Chatillon-Coligny (FR); Quenel, David, F-45500 Gien (FR)
(74) Mandataire: Polus, Camille

(56) Documents cités:
- FR-A- 2 060 344
- FR-A- 2 060 684
- FR-A- 2 101 303
- FR-A- 2 129 447
- FR-E- 95 943
- GB-A- 1 201 897

## Description

La présente invention concerne les coussins pour siège et, notamment, pour siège de véhicules automobiles terrestres, qui présentent une surface portante réglable à volonté selon les souhaits de l'occupant. Elle concerne en particulier un dispositif pour l'immobilisation d'une partie mobile réglable d'un coussin de siège par exemple d'un appui-tête notamment d'un siège de véhicule automobile terrestre.

Il est bien connu que les dimensions d'un siège, chaise, fauteuil , canapé par exemple et celles de leurs accessoires tels les accoudoirs et appui-têtes, sont adaptées à la morphologie moyenne d'une population déterminée d'individus destinés à les utiliser, ces moyenne et population s'entendant au sens statistique des termes. Il s'ensuit que des sièges conçus et fabriqués dans ces conditions ne conviennent pas lorsque l'occupant a une morphologie qui s'écarte notablement de la moyenne.

Des difficultés se rencontrent en particulier avec l'assise d'un siège lorsque son occupant a des jambes dont les cuisses sont longues ou courtes et lorsque cet occupant veut se "caler" dans le fond du siège, en appuyant confortablement son dos contre le dossier.

Il en est de même pour les appui-tête et les accoudoirs ainsi que pour les bourrelets ou ailes qui parfois bordent latéralement l'assise ou le dossier.

De plus, souvent l'occupant d'un siège souhaite pouvoir en modifier la conformation pour l'adapter à ses souhaits du moment en matière de confort notamment.

Ces situations se rencontrent par exemple pour les sièges de véhicules automobiles terrestres. Si ces sièges dont au moins celui destiné au conducteur, sont rendus mobiles en translation à l'aide de glissières parallèles à l'axe longitudinal médian du véhicule afin que l'utilisateur puisse adapter sa position en fonction à sa morphologie et/ou à son style de conduite, relativement à la configuration du poste de pilotage et à la géométrie du siège et à son état d'usure, ils ne résolvent pas totalement le problème de l'adaptation de la surface portante du siège car, en particulier ils nécessitent des dispositifs relativement complexes pour assurer l'immobilisation dans la position choisie de la partie mobile réglable du siège.

Une tentative de solution à ce problème est exposée dans le document FR-A-2 694 172.

La solution selon ce document, si elle donne relativement satisfaction, ne convient pas à toutes les situations, en particulier lorsqu'elle est utilisée pour un appui-tête. En effet, dans un tel cas, l'appui-tête et son montage doivent satisfaire à des normes en matière de sécurité édictées par des organismes professionnels et/ou les Pouvoirs Publics, afin de pouvoir résister à des chocs relativement violents à composante longitudinale importante, repérée par rapport à l'axe du véhicule.

FR-A-2 060 684 décrit un dispositif pour l'immobilisation d'une partie mobile réglable d'un coussin de siège, le dispositif étant du type comprenant un bâti, un guide fait de deux éléments, à savoir, une glissière et un curseur monté mobile sur la glissière de manière à pouvoir coulisser relativement à cette dernière, un support monté sur l'un des éléments du guide et destiné à recevoir ladite partie mobile du coussin, l'autre élément du guide étant monté fixe sur le bâti, un arrêtoir fait d'une crémaillère coopérant avec des moyens de coopération aptes à être en prise avec la crémaillère de manière à immobiliser le curseur relativement à la glissière et à en être désolidarisé de manière à libérer le curseur, et des moyens de sollicitation élastique tendant à mettre en prise les moyens de coopération et la crémaillère, la libération du curseur permettant son mouvement de coulissement relativement à la glissière et le réglage correspondant de la position de la partie mobile du coussin.

Le but de l'invention est de construire un dispositif pour l'immobilisation d'une partie mobile réglable tel un appui-tête d'un coussin de siège notamment d'un véhicule automobile terrestre qui ne présente pas les inconvénients précédemment brièvement rappelés.

A cet effet, l'invention a pour objet un dispositif du type précité, caractérisé par le fait que le bâti est monté fixe sur le siège, la glissière étant montée fixe sur le bâti, par le fait que le support est fait d'une coulisse montée fixe sur le curseur et d'un coulisseau qui est destiné à recevoir ladite partie mobile du coussin et qui est monté mobile sur la coulisse de manière à pouvoir se déplacer en translation et en rotation relativement à cette dernière, par le fait que la crémaillère est double et portée par la glissière, les deux dentures de la crémaillère étant disposées face à face et orientées parallèlement à la glissière, et par le fait que les moyens de coopération sont constitués d'un pignon qui est monté fixe sur le coulisseau et qui est apte à être mis en prise simultanément avec les deux dentures de la crémaillère, de telle sorte que lorsque le pignon est en prise avec la crémaillère, le coulisseau est immobilisé en rotation relativement à la coulisse, et que lorsque le pignon est désolidarisé de la crémaillère, le coulisseau est libéré et peut se déplacer en rotation par rapport à la coulisse, permettant le réglage correspondant de la position de la partie mobile du coussin, la mise en prise et la désolidarisation du pignon et de la crémaillère étant obtenues par la translation du coulisseau relativement à la coulisse.

L'invention a aussi pour objet l'application d'au moins un dispositif du type exposé auparavant à un appui-tête de siège notamment de véhicule automobile terrestre.

D'autres caractéristiques de l'invention apparaîtront à la lecture de la description et des revendications qui suivent ainsi qu'à l'examen du dessin annexé, donné seulement à titre d'exemple, où :
- les Figures 1 et 2 sont des vues en élévation latérale partiellement en coupe d'un dispositif selon l'invention dans deux positions différentes; et
- les Figures 3 et 4 sont des vues partiellement en coupe longitudinale, des Figures 1 et 2 où l'arrêtoir est en position en prise et en position désolidarisée, respectivement.

Les sièges en général ainsi que leurs constituants, notamment ceux montés à bord des véhicules automobiles terrestres étant bien connus dans la technique, on ne décrira dans ce qui suit que ce qui concerne directement ou indirectement l'invention. Pour le surplus, l'homme du métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un dispositif pour l'immobilisation d'une partie mobile réglable d'un coussin de siège selon l'invention avant d'en exposer la fabrication au besoin, et le fonctionnement.

Comme on le voit en examinant les figures du dessin, un dispositif pour l'immobilisation d'une partie mobile réglable d'un coussin de siège comprend essentiellement un bâti 10, un guide 20, un support 30, un arrêtoir 40, des moyens de sollicitation élastiques 50 et, s'il y a lieu, des butées 60.

Dans la suite de l'exposé, le dispositif suivant l'invention est décrit dans son application particulière à un appui-tête de siège notamment de véhicule automobile terrestre, mais il est clair que l'invention n'est pas limitée à cette seule application et qu'elle peut aussi être utilisée pour les ailes ou bourrelets latéraux d'un coussin d'assise et/ou de dossier ou pour le traversin ou similaire situé à l'extrémité antérieure transversale d'une assise pour soutenir le creux poplité de son occupant.

Le bâti 10 fait en tout matériau approprié convenablement mis en forme tels que par exemple des tubes ou flans métalliques emboutis et découpés, est destiné à être monté fixe sur un siège par l'entremise de l'armature de ce dernier. Le siège et son armature sont de tout type classique courant et pour cela non représentés. Le montage du bâti sur l'armature est obtenu par toute technique classique, par exemple soudage, rivetage, vissage, collage...

Le guide 20 est fait d'une glissière 21 et d'un curseur 22. La glissière 21 est montée fixe sur le bâti 10 et le curseur 22 est monté mobile sur la glissière 21 de manière à pouvoir coulisser relativement à cette dernière. De préférence, la glissière 21 est en forme d'un double U délimitant deux rainures 211 face à face, parallèles. Le curseur 22 est de préférence fait d'une plaquette 220 dont deux côtés 221 opposés sont logés dans les rainures 211 au besoin avec interposition sur l'un au moins de ces côtés 221 d'un patin 2210 antifriction. La glissière 21 est obtenue par exemple à partir d'un flan de tôle métallique d'une nuance appropriée, mis en forme par emboutissage et pliage. Il en de même du curseur 22. Les patins anti-friction 2210 fixés à demeure ou montés de manière amovibles, sont faits par exemple en un matériau synthétique approprié tel que le polytétrafluoréthylène.

Le support 30 est fait d'une coulisse 31 et d'un coulisseau 32. La coulisse 31 est montée fixe sur le curseur 22 et le coulisseau 32 est monté mobile sur la coulisse 31 de manière à pouvoir se déplacer en translation et en rotation relativement à cette dernière. Ce coulisseau est destiné à recevoir cette partie P de coussin par exemple un appui-tête dont la garniture est faite d'un rembourrage interne et d'un revêtement externe comme il est classique. De préférence, la coulisse 31 est une tige ou barre, par exemple creuse de préférence, à section droite circulaire et le coulisseau 32 est un tube engagé sur la coulisse et de section complémentaire. La coulisse 31 est montée fixe sur le curseur 22 par exemple engagée dans un orifice de ce dernier et à l'aide d'un manchon, comme dessiné. Le montage est obtenu par toute technique classique, comme indiqué précédemment.

Comme on peut l'observer, le guide 20 et le support 30 sont, de préférence, pratiquement perpendiculaires l'un à l'autre.

L'arrêtoir 40 est fait d'une crémaillère double 41 et d'un pignon 42. La crémaillère double 41 est portée fixe sur la glissière 21. Les deux dentures 411 de la crémaillère sont disposées face à face et orientées parallèlement à la glissière 21. De préférence, la crémaillère 41 est faite par exemple d'une plaque 400 dans laquelle est ménagé un ajour 401 longiligne, délimité notamment par deux faces 402 opposées qui portent chacune l'une des dentures 411 de la crémaillère, ainsi que par deux bouts 403. Le pignon 42 est monté fixe de toute manière appropriée sur le coulisseau 32 et est apte à être mis en prise simultanément avec les deux dentures 411 de la crémaillère 41. Lorsque le pignon est en prise avec les deux dentures de la crémaillère, il immobilise le coulisseau 32 relativement à la coulisse 31 en rotation, d'une part, et le curseur 22 relativement à la crémaillère 21 par exemple en translation, d'autre part. Lorsque ce pignon est désolidarisé des deux dentures de la crémaillère de la manière que l'on exposera par la suite, le coulisseau 32 est libérée pour pouvoir être déplacé notamment en rotation relativement à la coulisse 31 et/ou en translation par déplacement du curseur 22 dans la glissière 21. Comme on le comprendra par la suite, cette désolidarisation du pignon et de la crémaillère permet donc de régler à volonté la position de la partie mobile du coussin tant en rotation qu'en élongation par exemple hauteur ou profondeur. Le pignon 42 est muni d'un épaulement 421 ou similaire, d'un seul tenant ou rapporté et fixé comme illustré, dont le rôle apparaîtra par la suite.

La crémaillère double 41 ainsi que la glissière 21 sont de préférence rectilignes.

Les moyens de sollicitation élastique 50 sont par exemple un ressort à boudin fait d'un fil métallique enroulé en hélice cylindrique qui est de préférence logé dans la tige creuse de la coulisse 31 de manière à tendre normalement à mettre en prise le pignon 42 et la crémaillère 41. Ce ressort est monté comme illustré, une extrémité en appui contre la coulisse et une extrémité en appui contre un bouchon ou similaire encastré dans le coulisseau. L'épaulement 421 assure le maintien de la position longitudinale du coulisseau sur la coulisse à l'encontre de la sollicitation élastique.

De préférence, des butées 60 sont disposées pour limiter la course par exemple en translation du curseur 22 dans la glissière 21. Ces butées sont, par exemple, des pattes 61 ménagées sur les bouts 403 de l'ajour 401 de la plaque 400 constituant la crémaillère 41.

Tous les constituants d'un dispositif pour l'immobilisation d'une partie mobile réglable d'un coussin de siège selon l'invention sont réunis, montés et assemblés comme cela résulte clairement de l'examen des figures du dessin.

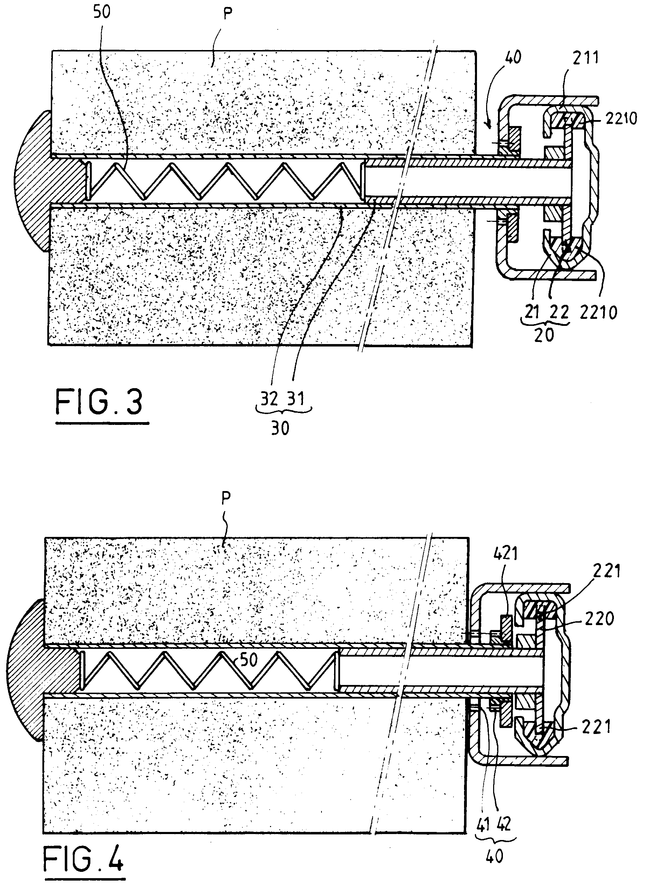

On suppose qu'initialement le dispositif selon l'invention est dans la position où il est illustré sur la Figure 3.

Comme on peut l'observer sur cette figure, le ressort à boudin des moyens de sollicitation élastiques prend appui, d'une part, sur la coulisse fixe 31 et aussi, d'autre part, indirectement sur le coulisseau mobile 32, et développe un effort qui tend à faire se séparer le coulisseau de la coulisse. Du fait des positions relatives adoptées, on voit que cet effort tend normalement à mettre en prise le pignon 42 avec les deux dentures 411 opposées de la crémaillère double 41, la position longitudinale du coulisseau étant assurée par l'épaulement du pignon en appui contre la crémaillère double. On voit donc que le pignon ne peut pas tourner sur lui-même et ne peut pas davantage coulisser par exemple en translation. La partie de coussin de siège tel un appui-tête, se trouve donc immobilisée dans la position qu'elle occupe. Si maintenant on agit sur l'appui-tête afin de lui faire prendre la position illustrée sur la Figure 4 en exerçant un effort à l'encontre de la sollicitation élastique, on sépare le pignon 42 de la crémaillère double 41. Ce faisant on peut faire tourner le coulisseau sur lui-même par rapport à la coulisse qui lui sert d'axe, c'est-à-dire qu'on peut modifier la position "en rotation" ou "en inclinaison" de l'appui-tête, et on peut aussi déplacer le curseur 22 par exemple en translation dans la glissière 21 du guide 20, c'est-à-dire qu'on peut modifier la position "en hauteur" ou "en profondeur" de l'appui-tête avec une course dont l'amplitude est limitée par les butées.

En cessant d'agir sur l'appui-tête, la sollicitation élastique réenclenche, solidarise, met en prise automatiquement pignon et crémaillère, comme illustré sur la Figure 4. Cette opération est facilitée en donnant un chanfrein, un biseau ou similaire aux dents du pignon et des crémaillères en vis-à-vis pour éviter qu'elles butent.

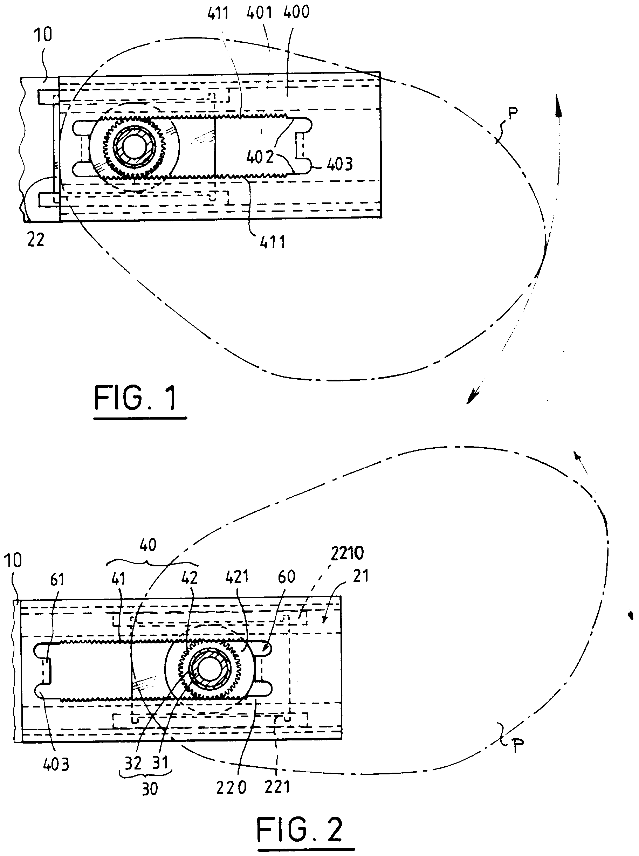

Sur les Figures 1 et 2 on a représenté l'appui-tête à chacune des deux extrémités de la course du curseur dans la glissière et avec des orientations en rotation différentes.

On comprend donc que grâce au dispositif selon l'invention, on dispose d'un réglage pratiquement continu dont le pas n'est tributaire que de celui adopté pour le pignon et la crémaillère double.

Sur les Figure 1 et 2 l'enveloppe au sens géométrique, des diverses positions que peut prendre en rotation l'appui-tête à chacune des deux extrémités de sa course est schématisée par une amorce de cercle en trait discontinu.

Pour le mode de réalisation décrit, le bâti, la glissière du guide et la plaque de crémaillère sont illustrés comme des constituants matériellement distincts réunis les uns aux autres, il est clair que ces constituants peuvent aussi être fabriqués totalement ou partiellement d'un seul tenant selon la réalisation pratique retenue.

On voit donc que grâce au dispositif selon l'invention, le réglage peut être obtenu en tenant la partie mobile à régler d'une seule main en effectuant dans un seul geste le déverrouillage et l'ajustement de la position tant en rotation qu'en élongation, puis le reverrouillage en la relâchant.

Dans l'application particulière décrite et représentée, on utilise un seul dispositif selon l'invention, la partie mobile ou l'appui-tête étant en quelque sorte monté en porte-à-faux à l'aide du dispositif selon un axe pratiquement horizontal. Il est clair qu'on peut, en pratique, placer un dispositif selon l'invention de chaque côté de la partie mobile à régler; il faut alors seulement veiller à ne pas les placer symétriquement mais au contraire dans le même sens afin de converser la manipulation d'une seule main et d'un seul geste de préhension pour déverrouiller simultanément les deux pignons des deux crémaillères doubles.

Ce qui précède met bien en lumière les particularités du dispositif selon l'invention ainsi que les avantages qu'il procure et l'intérêt qu'il offre.

## Revendications

1. Dispositif pour l'immobilisation d'une partie mobile réglable d'un coussin de siège, le dispositif étant du type comprenant :
- un bâti (10),
- un guide (20) fait de deux éléments (21,22), à savoir, une glissière (21) et un curseur (22) monté mobile sur la glissière (21) de manière à pouvoir coulisser relativement à cette dernière (21),
- un support (30) monté sur l'un (22) des éléments (21,22) du guide (20) et destiné à recevoir ladite partie mobile du coussin, l'autre élément (21) du guide (20) étant monté fixe sur le bâti (10),
- un arrêtoir (40) fait d'une crémaillère (41) coopérant avec des moyens de coopération (42) aptes à être en prise avec la crémaillère (41) de manière à immobiliser le curseur (22) relativement à la glissière (21) et à en être désolidarisé de manière à libérer le curseur (22), et
- des moyens de sollicitation élastique (50) tendant à mettre en prise les moyens de coopération (42) et la crémaillère (41), la libération du curseur (22) permettant son mouvement de coulissement relativement à la glissière (21) et le réglage correspondant de la position de la partie mobile du coussin,
caractérisé par le fait que le bâti (10) est monté fixe sur le siège, la glissière (21) étant montée fixe sur le bâti (10),
par le fait que le support (30) est fait d'une coulisse (31) montée fixe sur le curseur (22) et d'un coulisseau (32) qui est destiné à recevoir ladite partie mobile du coussin et qui est monté mobile sur la coulisse (31) de manière à pouvoir se déplacer en translation et en rotation relativement à cette dernière (31),
par le fait que la crémaillère (41) est double et portée par la glissière (21), les deux dentures (411) de la crémaillère (41) étant disposées face à face et orientées parallèlement à la glissière (21),
et par le fait que les moyens de coopération sont constitués d'un pignon (42) qui est monté fixe sur le coulisseau (32) et qui est apte à être mis en prise simultanément avec les deux dentures (411) de la crémaillère (41), de telle sorte que lorsque le pignon (42) est en prise avec la crémaillère (41), le coulisseau (32) est immobilisé en rotation relativement à la coulisse (31), et que lorsque le pignon (42) est désolidarisé de la crémaillère (41), le coulisseau (32) est libéré et peut se déplacer en rotation par rapport à la coulisse (31), permettant le réglage correspondant de la position de la partie mobile du coussin, la mise en prise et la désolidarisation du pignon (42) et de la crémaillère (41) étant obtenues par la translation du coulisseau (32) relativement à la coulisse (31).

2. Dispositif selon la revendication 1, caractérisé en ce que la glissière (21) et la crémaillère double (41) sont rectilignes.

3. Dispositif selon la revendication 1 ou 2, caractérisé en ce que le guide (20) et le support (30) sont perpendiculaires l'un à l'autre.

4. Dispositif selon l'une quelconque des revendications 1 à 3, caractérisé en ce que la coulisse (31) est une tige à section droite circulaire et le coulisseau (32) est un tube engagé sur la coulisse (31).

5. Dispositif selon l'une quelconque des revendications 1 à 4, caractérisé en ce que les moyens de sollicitation élastique (50) sont un ressort à boudin.

6. Dispositif selon la revendication 4, caractérisé en ce que la tige de la coulisse (31) est creuse.

7. Dispositif selon les revendications 5 et 6, caractérisé en ce que le ressort à boudin (50) est logé dans la tige creuse de la coulisse (31).

8. Dispositif selon l'une quelconque des revendications 1 à 7, caractérisé en ce que des butées (60) sont associées à la glissière (21) pour limiter l'amplitude de la course du curseur (22).

9. Dispositif selon l'une quelconque des revendications 1 à 8, caractérisé en ce que la glissiére (21) est en forme d'un double U délimitant deux rainures (211) face à face parallèles et en ce que le curseur (22) est une plaquette (220) dont deux côtés (221) opposés sont logés dans les rainures (211).

10. Dispositif selon la revendication 9, caractérisé en ce que l'un au moins des deux côtés opposés (221) est muni d'un patin (2210) antifriction.

11. Dispositif selon l'une quelconque des revendications 1 à 10, caractérisé en ce que l'arrêtoir (40) est fait d'une plaque (400) dans laquelle est ménagé un ajour (401) longiligne délimité notamment par deux faces (402) opposées qui portent, chacune, l'une des dentures (411) de la crémaillère (41).

12. Dispositif selon l'une quelconque des revendications 1 à 8, caractérisé en ce que les butées (60) sont constituées par deux pattes (61) de la plaque (400) de la crémaillère (41).

13. Dispositif selon les revendications 11 et 12, caractérisé en ce que les deux pattes (61) sont portées par des bouts (403) opposés de l'ajour longiligne (401).

14. Application d'au moins un dispositif selon l'une quelconque des revendications 1 à 13 à un appui-tête de siège notamment de véhicule automobile terrestre.

## Claims

1. Device for immobilising an adjustable mobile portion of a seat cushion, the device being of a type comprising:
- a frame (10),
- a guide (20) made of two members (21, 22), i.e. a slide (21) and a traveller (22) mounted to be mobile on the slide (21) so that it can slide relative to the latter (21),
- a support (30) mounted on one (22) of the members (21, 22) of the guide (20), and intended to receive the said mobile portion of the cushion, the other member (21) of the guide (20) being fixedly mounted on the frame (10),
- a stop means (40) made up of a rack (41) cooperating with means of co-operation (42) adapted to be in engagement with the rack (41) so as to immobilise the traveller (22) relative to the slide (21) and to be released therefrom, in order to free the traveller (22), and
- resilient thrust means (50) tending to bring into engagement the means of co-operation (42) and the rack (41), release of the traveller (22) enabling its sliding movement relative to the slide (21) and corresponding adjustment of the position of the mobile portion of the cushion,
characterised by the fact that the frame (10) is fixedly mounted on the seat, the slide (21) being fixedly mounted on the frame (10),
by the fact that the support (30) is made of a slide (31) fixedly mounted on the traveller (22) and of a cradle (32) which is intended to receive said mobile portion of the cushion, and which is movable on the slide (31) so as to be capable of translational and rotational displacement relative to the latter (31),
by the fact that the rack (41) is double and carried by the slide (21), the two toothings (411) of the rack (41) being disposed face to face and oriented parallel to the slide (21),
and by the fact that the means of co-operation are constituted by a pinion (42) which is fixedly mounted on the cradle (32) and which is adapted to be brought into engagement simultaneously with the two toothings (411) of the rack (41) so that, when the pinion (42) is in engagement with the rack (41), the cradle (32) is secured against rotation relative to the slide (31), and in that, when the pinion (42) is released from the rack (41), the cradle (32) is freed, and can shift rotarily relative to the slide (31) enabling corresponding adjustment of the position of the mobile portion of the cushion, the engagement and release of the pinion (42) and of the rack (41) being obtained by the translatory movement of the cradle (32) relative to the slide (31).

2. Device according to claim 1, characterised in that the slide (21) and the double rack (41) are rectilinear.

3. Device according to claim 1 or 2, characterised in that the guide (20) and the support (30) are perpendicular to one another.

4. Device according to any one of claims 1 to 3, characterised in that the slide (31) is a stem with a circular cross-section, and the cradle (32) is a tube engaged on the slide (31).

5. Device according to any one of claims 1 to 4, characterised in that the resilient thrust means (50) are a helical spring.

6. Device according to claim 4, characterised in that the stem of the slide (31) is hollow.

7. Device according to claims 5 and 6, characterised in that the helical spring (50) is housed in the hollow stem of the slide (31).

8. Device according to any one of claims 1 to 7, characterised in that stops (60) are associated with the slide (21) in order to limit the amplitude of travel of the traveller (22).

9. Device according to any one of claims 1 to 8, characterised in that the slide (21) is in the form of a double U defining two parallel grooves (211), face to face, and in that the traveller (22) is a plate (220), two opposed sides (221) of which are housed in the grooves (211).

10. Device according to claim 9, characterised in that one at least of the two opposed sides (221) is equipped with an antifriction skid (2210).

11. Device according to any one of claims 1 to 10, characterised in that the stop means (40) is made of a plate (400) in which there is provided an extended linear aperture (401) defined in particular by two opposed faces (402) each of which carries one of the toothings (411) of the rack (41).

12. Device according to any one of claims 1 to 8, characterised in that the stops (60) are constituted by two tabs (61) of the plate (400) of the rack (41).

13. Device according to claims 11 and 12, characterised in that the two tabs (61) are carried by opposed ends (403) of the extended linear aperture (401).

14. Application of at least one device according to any one of claims 1 to 13 to a seat headrest, particularly for a terrestrial automobile.

## Patentansprüche

1. Vorrichtung zum Feststellen eines einstellbaren beweglichen Teils eines Sitzpolsters, wobei die Vorrichtung so beschaffen ist, daß sie enthält:
- einen Rahmen (10),
- eine Führung (20), die aus zwei Elementen (21, 22) hergestellt ist, nämlich einer Laufschiene (21) und einem Läufer (22), der auf der Laufschiene (21) in der Weise beweglich angebracht ist, daß er relativ zu dieser letzteren (21) gleiten kann,
- einen Träger (30), der an einem (22) der Elemente (21, 22) der Führung (20) angebracht und dazu vorgesehen ist, den beweglichen Teil des Polsters aufzunehmen, während das andere Element (21) der Führung (20) am Rahmen (10) fest angebracht ist,
- eine Arretierung (40), die aus einer Zahnstange (41) hergestellt ist, die mit Zusammenwirkungsmitteln (42) zusammenwirkt, die so beschaffen sind, daß sie mit der Zahnstange (41) in der Weise in Eingriff gelangen, daß der Läufer (22) relativ zur Laufschiene (21) festgestellt wird, und daß sie von dieser gelöst werden, um den Läufer (22) freizugeben, und
- elastische Belastungsmittel (50), die bestrebt sind, die Zusammenwirkungsmittel (42) und die Zahnstange (41) in Eingriff zu bringen, wobei die Freigabe des Läufers (22) seine Gleitbewegung relativ zur Laufschiene (21) und die entsprechende Einstellung der Position des beweglichen Teils des Polsters ermöglicht,
gekennzeichnet durch die Tatsache, daß der Rahmen (10) fest am Sitz angebracht ist, wobei die Laufschiene (21) fest am Rahmen (10) angebracht ist,
durch die Tatsache, daß der Träger (30) aus einer Gleitbahn (31), die am Läufer (22) befestigt ist, und aus einem Schlitten (32) hergestellt ist, der dazu bestimmt ist, den beweglichen Teil des Polsters aufzunehmen, und der an der Gleitbahn (31) beweglich in der Weise angebracht ist, daß er sich in Verschiebungsrichtung und in Drehrichtung relativ zu dieser letzteren (31) bewegen kann,
durch die Tatsache, daß die Zahnstange (41) doppelt ist und von der Laufschiene (21) getragen wird, wobei die zwei Zahnungen (411) der Zahnstange einander zugewandt sind und parallel zur Laufschiene (21) orientiert sind,
und durch die Tatsache, daß die Zusammenwirkungsmittel aus einem Zapfen (42) gebildet sind, der am Schlitten (32) fest angebracht und so beschaffen ist, daß er gleichzeitig mit den zwei Zahnungen (411) der Zahnstange (41) in Eingriff gebracht werden kann, derart, daß der Schlitten (32) beim Eingriff des Zapfens (42) mit der Zahnstange (41) in Drehrichtung relativ zur Gleitbahn (31) festgestellt ist, und daß der Schlitten (32) bei der Lösung des Zapfens (42) von der Zahnstange (41) frei ist und sich in Drehrichtung in bezug auf die Gleitbahn (31) bewegen kann, wodurch die entsprechende Einstellung der Position des beweglichen Teils des Polsters ermöglicht wird, wobei die Herstellung und die Lösung des Eingriffs zwischen dem Zapfen (42) und der Zahnstange (41) durch die Verschiebung des Schlittens (32) relativ zur Gleitbahn (31) erhalten wird.

2. Vorrichtung nach Anspruch 1, dadurch gekennzeichnet, daß die Laufschiene (21) und die doppelte Zahnstange (41) geradlinig sind.

3. Vorrichtung nach Anspruch 1 oder 2, dadurch gekennzeichnet, daß die Führung (20) und der Träger (30) zueinander senkrecht sind.

4. Vorrichtung nach irgendeinem der Ansprüche 1 bis 3, dadurch gekennzeichnet, daß die Gleitbahn (31) ein Stift mit kreisförmigem Querschnitt ist und der Schlitten (32) ein mit der Gleitbahn (31) in Eingriff befindliches Rohr ist.

5. Vorrichtung nach irgendeinem der Ansprüche 1 bis 4, dadurch gekennzeichnet, daß die elastischen Vorbelastungsmittel (50) eine Schraubenfeder sind.

6. Vorrichtung nach Anspruch 4, dadurch gekennzeichnet, daß der Stift der Gleitbahn (31) hohl ist.

7. Vorrichtung nach den Ansprüchen 5 und 6, dadurch gekennzeichnet, daß die Schraubenfeder (50) im hohlen Stift der Gleitbahn (31) untergebracht ist.

8. Vorrichtung nach irgendeinem der Ansprüche 1 bis 7, dadurch gekennzeichnet, daß der Laufschiene (21) Anschläge (60) zugeordnet sind, um die Amplitude des Hubs des Läufers (22) zu begrenzen.

9. Vorrichtung nach irgendeinem der Ansprüche 1 bis 8, dadurch gekennzeichnet, daß die Laufschiene (21) die Form eines doppelten U besitzt, die zwei einander zugewandte, parallele Rillen (211) begrenzt, und daß der Läufer (22) ein Blättchen (220) ist, wovon zwei einander gegenüberliegende Seiten (221) in den Rillen (211) angeordnet sind.

10. Vorrichtung nach Anspruch 9, dadurch gekennzeichnet, daß eine der zwei gegenüberliegenden Seiten (221) mit einer Antireibkufe (2210) versehen ist.

11. Vorrichtung nach irgendeinem der Ansprüche 1 bis 10, dadurch gekennzeichnet, daß die Arretierung (40) aus einer Platte (400) hergestellt ist, in der ein länglicher Durchbruch (401) ausgespart ist, der insbesondere durch zwei gegenüberliegende Flächen (402) begrenzt ist, die jeweils eine der Zahnungen (401) der Zahnstange (41) tragen.

12. Vorrichtung nach irgendeinem der Ansprüche 1 bis 8, dadurch gekennzeichnet, daß die Anschläge (60) aus zwei Ansätzen (61) der Platte (400) der Zahnstange (41) gebildet sind.

13. Vorrichtung nach den Ansprüchen 11 und 12, dadurch gekennzeichnet, daß die zwei Ansätze (61) durch zwei dem länglichen Durchbruch (401) gegenüberliegende Stummel (403) getragen werden.

14. Anwendung wenigstens einer Vorrichtung nach irgendeinem der Ansprüche 1 bis 13 auf eine Sitz-Kopfstütze, insbesondere für terrestrische Kraftfahrzeuge.
